Europäisches Patentamt

European Patent Office

Office européen des brevets

(11) Veröffentlichungsnummer: 0 268 004

A1

## (12) EUROPÄISCHE PATENTANMELDUNG

(21) Anmeldenummer: 87103645.5

(22) Anmeldetag: 13.03.87

(51) Int. Cl.⁴: G01P 13/02 , G01P 5/10

(30) Priorität: 04.11.86 DE 3637538

(43) Veröffentlichungstag der Anmeldung:
25.05.88 Patentblatt 88/21

(84) Benannte Vertragsstaaten:
DE FR GB IT SE

(71) Anmelder: VDO Adolf Schindling AG
Gräfstrasse 103
D-6000 Frankfurt/Main(DE)

(72) Erfinder: Porth, Wolfgang
Röhrborngass 70
D-6000 Frankfurt am Main(DE)
Erfinder: Weibler, Wolfgang, Dr.
Vor der Heide 14
D-6238 Hofheim a. T.(DE)

(74) Vertreter: Klein, Thomas, Dipl.-Ing. (FH)
Sodener Strasse 9 Postfach 6140
D-6231 Schwalbach a. Ts.(DE)

(54) Vorrichtung zur Bestimmung der Durchflussrichtung.

(57) Um das Auftreten einer Rückströmung in einem mit bekanntem Massenstrom strömenden rasch pulsierenden Fluidstrom insbesondere im Ansaugkanal (10) eines Verbrennungsmotors zu erkennen, wird eine Vorrichtung zur Bestimmung der Durchflußrichtung mit einem elektrisch beheizten Heizelement (16) und zwei zu diesem benachbart angeordneten Temperatur-Meßelementen (12, 14) vorgeschlagen, wobei je nach Strömungsrichtung das eine Temperatur-Meßelement (12 oder 14) im Zustrom und das andere Temperatur-Meßelement (14 bzw. 12) im Abstrom vom Heizelement (16) angeordnet ist.

FIG.1

EP 0 268 004 A1

## Vorrichtung zur Bestimmung der Durchflußrichtung

Die Erfindung betrifft eine Vorrichtung zur Bestimmung der Durchflußrichtung eines mit bekanntem Massenstrom im wesentlichen gerichtet strömenden Fluids mit einem elektrisch beheizten Heizelement und zumindest einem Temperatur-Meßelement.

Die Steuerung der Treibstoffeinspritzung von Verbrennungs-Motoren erfolgt in Abhängigkeit vom Massenstrom der Ansaugluft. Zur Messung des Massenstroms dient in vielen Fällen eine nach dem elektrothermischen Prinzip arbeitende Massenstrom-Meßvorrichtung. Eine derartige Meßvorrichtung weist zur Temperaturkompensation zumindest ein Temperatur-Meßelement auf und die eigentliche Massenstrom-Meßvorrichtung, deren Hauptbestandteil ein elektrisch heizbares im Massenstrom angeordnetes Widerstandselement ist. Die Wärmeableitung von diesem Heizelement ist ein Maß für den Massenstrom, wobei umsomehr Wärme abgeführt wird, je stärker der Massenstrom ist.

Eine derartige Massenstrom-Meßvorrichtung ist bezüglich der Strömungsrichtung sehr unempfindlich, denn unabhängig davon, ob die Strömung vorwärts oder rückwärts gerichtet ist, wird entsprechend der Wärmeableitung praktisch das gleiche elektrische Signal abgegeben. Mit anderen Worten kann mit einer bekannten Massenstrom-Meßvorrichtung lediglich der Betrag des Massenstroms ermittelt werden, nicht aber dessen Strömungsrichtung. Es hat sich nun gezeigt, daß im Ansaugsystem von Verbrennungsmotoren bei bestimmten Betriebszuständen Schwingungen der Luftsäule eintreten, welche der konstanten Strömung überlagert sind, so daß daraus eine rasch pulsierende Strömung resultiert. Je nach minütlicher Drehzahl und Zylinderzahl liegt die Grundfrequenz der Schwingung im Bereich zwischen 10 und 1000 Hertz. Je nach Strömungsgeschwindigkeit und Schwingungsamplitude treten während kurzer Zeitintervalle Rückströmungen auf. Aufgrund des oben geschilderten Meßprinzips der Massenstrom-Meßvorrichtung erzeugen Rückströmungen ein gleiches Meßsignal wie Ansaugströmungen, so daß letztlich eine zu hohe Menge an Treibstoff dem Motor zugeführt wird.

Aufgabe der vorliegenden Erfindung ist es, eine insbesondere im Ansaugsystem eines Verbrennungsmotors anordbare rasch ansprechende Vorrichtung zur Bestimmung der Durchflußrichtung eines pulsierenden Luftstromes während des Zeitraums einer Pulsation zu schaffen.

Erfindungsgemäß wird die Aufgabe dadurch gelöst, daß bei einer Vorrichtung nach dem Oberbegriff des Anspruchs 1 benachbart zum Heizelement zwei Temperatur-Meßelemente angeordnet sind, wobei je nach Strömungsrichtung das eine Temperatur-Meßelement im Zustrom und das andere Temperatur-Meßelement im Abstrom vom Heizelement angeordnet ist. Dadurch wird erreicht, daß vom Heizelement Wärme auf das jeweils im Abstrom angeordnete Temperatur-Meßelement übertragen wird, so daß dieses stets eine höhere Temperatur aufweist als das im Zustrom angeordnete Temperatur-Meßelement. Infolge unterschiedlicher Temperaturen geben die beiden Temperatur-Meßelemente unterschiedliche elektrische Signale ab, deren Differenz je nach Strömungsrichtung positiv oder negativ ist.

In der bevorzugten Ausführungsform ist im Fluidstrom ein Heizelement vorgesehen und je eines der beiden Temperatur-Meßelemente ist im Strömungsverlauf vor bzw. hinter dem Heizelement angeordnet. Die Anordung der Temperatur-Meßelemente erfolgt vorzugsweise symmetrisch zum Heizelement. Rasches Ansprechen der Temperatur-Meßelemente wird dadurch erreicht, daß diese selbst eine geringe Massenträgheit aufweisen, und daß die Abstände zum Heizelement klein sind. Das sichere Ansprechen der Vorrichtung wird dadurch erleichtert, daß diese im Zentrum der Strömung angeordnet ist.

Eine sichere Wärmeübertragung vom Heizelement auf das im Abstrom angeordnete Temperatur-Meßelement wird auch bei unterschiedlichen Strömungsgeschwindigkeiten dann erreicht, wenn das Heizelement und die diesem zugeordneten Temperatur-Meßelemente in einem Bereich laminarer Strömung angeordnet sind. Eine laminare Strömung kann beispielsweise dadurch erreicht werden, daß vor bzw. hinter der Vorrichtung jeweils ein "Strömungsgleichrichter" angeordnet ist, ein mit parallelen Kanälen versehener Körper wie Wabenkörper.

Der Level des von den beiden Temperatur-Meßelementen abgegebenen Signals ist nicht nur von der Strömungsrichtung sondern auch von der Strömungsgeschwindigkeit des Fluids sowie auch von der Temperatur des Heizelementes abhängig. Ein gleichmäßiger Signallevel wird dann erreicht, wenn die Temperatur des Heizelementes geregelt wird. Die Temperatur des Heizelementes kann vorteilhafterweise entweder auf einen konstanten absoluten Wert geregelt werden oder aber auf einen konstanten Differenzwert zur Temperatur des anströmenden Fluids.

Eine besonders kostengünstie Ausführung der Vorrichtung wird dann erreicht, wenn das Heizelement als PTC-Pille ausgebildet ist. die PTC-Pille regelt sich bei geeigneter passiver Beschaltung auf eine stabile Temperatur ein ohne aktive Bauelemente zu benötigen.

Erfindungsgemäß wird vorgeschlagen die Temperatur-Meßelemente als temperaturabhängige Widerstandselemente auszubilden, die als Spannungsteiler in einer Brückenschaltung angeordnet sind. Dabei bewirken Temperaturänderungen Widerstandsänderungen und diese führen zur Verstimmung der Brückenschaltung, so daß die an der Brückendiagonalen abgegriffene Spannung je nach Strömungsrichtung positiv oder negativ ist.

Metallische Widerstandselemente mit positiven Temperaturkoeffizienten (PTC) und hoher Stabilität wie Nichel oder Platin sind wegen ihrer Darstellbarkeit als dünne Drähte, Folien oder Filme besonders vorteilhaft. Widerstandselemente mit negativem Temperaturkoeffizienten (NTC) sind vorteilhaft, wenn es besonders auf große Temperaturkoeffizienten und damit große Sensorsignale ankommt.

Ein rasches Ansprechen der Widerstandselemente ist gewährleistet, wenn diese drahtförmig ausgebildet sind. Dabei werden die Widerstandselemente freistehend in der Strömung angeordnet und über den Querschnitt des Drahtes kann die Massenträgheit und somit die Ansprechzeit des Widerstandselementes beeinflußt werden. Under "Draht" ist hier jegliche langgestreckte Ausbildung des Widerstandes zu verstehen, wobei der Querschnitt rund, eckig oder flach sein kann. Insbesondere bei dünnen Drähten, welche ein rasches Ansprechen ermöglichen, ist Rücksicht auf die mechanische Stabilität zu nehmen. Die Anordnung kann sowohl in gestreckter Form als auch mäanderförmig oder spiralförmig erfolgen, wobei die Ebene des Mäanders bzw. der Spirale vorzugsweise in Längsrichtung zur Strömung angeordnet ist.

Es hat sich daher auch bewährt, Widerstandselemente folienförmig auszubilden, wobei die Widerstandsschicht auf ein Substrat mit geringer Wärmekapazität und hoher Temperaturleitzahl aufgebracht ist.

Derartige Widerstandselemente können insbesondere in mikrotechnische Bauelemente integriert werden.

Eine gleichmäßige Sensorempfindlichkeit wird dann erhalten, wenn eine Regeleinheit zur Regelung der Speisespannung des Heizelementes vorgesehen ist. Auf diese Weise erfolgt sowohl bei geringem, als auch bei hohem Massenstrom die Messung bei gleicher Temperatur der Meßwiderstände. Zur Einstellung der Speisespannung kann beispielsweise ein Signal der Massenfluß-Meßvorrichtung verarbeitet werden. Es ist jedoch auch möglich, die Speisespannung in Abhängigkeit des Widerstandes eines der beiden temperaturabhängigen Widerstandselemente so zu regeln, daß dieser Widerstand stets einen konstanten Wert beibehält. Dadurch ist das Meßsignal alleine abhängig vom Widerstandswert des strömungsbeeinflußten zweiten temperaturabhängigen Widerstandselementes.

In einer weiteren Ausgestaltung der Erfindung wird vorgeschlagen, Thermoelemente als Temperatur-Meßelemente vorzusehen. Thermoelemente haben den Vorteil, schnell zu reagieren und auch in Dünnschichttechnik kostengünstig und vielgestaltig beispielsweise als Thermobatterien oder Halbleiterelemente herstellbar zu sein.

Die Information über die Strömungsrichtung des Fluids wird aus der Temperaturdifferenz der beiden Temperatur-Meßelemente abgeleitet. Es ist daher beim Einsatz von Thermoelementen vorteilhaft, zwei elektrisch gleichpolige Schenkel der beiden Thermoelemente innerhalb der Vorrichtung direkt miteinander zu verbinden, so daß nur je ein Schenkel eines jeden Thermoelementes herausgeführt ist. Somit liegt zwischen diesen beiden Schenkeln nur die Differenzspannung beider Thermoelemente an. Da beide Schenkel aus dem gleichen Material bestehen, sind an elektrischen Anschlußelementen auftretende Thermospannungen automatisch kompensiert. Zur Erzielung einer hohen Thermospannung können mehrere Thermoelemente zu einer Thermoelementbatterie hintereinandergeschaltet werden, wenn eine Punktförmige Temperaturmessung nicht erforderlich ist.

In weiterer Ausbildung der Erfindung wird vorgeschlagen, die erfindungsgemäße Vorrichtung mit einer an sich bekannten Vorrichtung zur Steuerung der Treibstoff-Einspritzung in Abhängigkeit vom Massenstrom der angesaugten Luftmenge zu verbinden, wobei Treibstoff-Dosierung in Abhängigkeit von den abgegebenen Signalen der Temperatur-Meßelemente erfolgt. Auf diese Weise ist es möglich, die in bestimmten Betriebszuständen eintretende zu hohe Dosierung von Treibstoff zu vermindern, sobald über die erfindungsgemäße Vorrichtung eine Rückströmung im Ansaugsystem des Verbrennungsmotors festgestellt ist.

Eine besonders vorteilhafte Ausführungsform der erfindungsgemäßen Vorrichtung liegt dann vor, wenn die Temperatur-Meßelemente mit dem Eingang eines Verstärkers verbunden sind, dessen Ausgang über einen Schmitt-Trigger mit dem Eingang einer Steuereinheit verbunden ist, welche mit einem zweiten Eingang außerdem mit einer Massenstrom-Meßvorrichtung verbunden ist und ausgangsseitig mit einer Treibstoff-Dosiervorrichtung verbunden ist. Dabei wird das von einer an sich bekannten Massenstrom-Meßvorrichtung an eine ebenfalls bekannte Treibstoff-Dosiervorrichtung abgegebene Meßsignal erfindungsgemäß durch das von der Vorrichtung zur Bestimmung der Durchflußrichtung abgegebene Korrektursignal beeinflußt. Da beide Signale in einem rasch pulsierenden Ansaugluftstrom ständigen Änderungen unterworfen sind, wird das richtungsabhängige Korrektursignal über einen Schmitt-Trigger als Schwellwert-Schalter eingespeist, um ein unnötiges Aufschaukeln der Regelkreise bei kleinen Signalpegeln zu unterdrücken.

Es hat sich weiterhin bewährt, das der Pulsation unterliegende Ausgangssignal der Steuereinheit vor dem Eingang in die Treibstoff-Dosiervorrichtung durch einen Integrator zu glätten.

Sofern die Massenstrom-Meßvorrichtung und die Vorrichtung zur Bestimmung der Durchflußrichtung voneinander beabstandet sind und verschiedene Ansprechzeiten aufweisen, kann es vorkommen, daß die Signale beider Vorrichtungen zeitlich verschoben zueinander eintreffen. Es ist dann empfehlenswert, zwischen dem Ausgang des Schmitt-Triggers und dem Eingang der Steuereinheit einen Phasenschieber anzuordnen. Wird in besonderen Fällen eine von der Zeitdauer des Korrektursignals verschiedene Zeitdauer der Beeinflussung des Meßsignals gewünscht, so ist es vorteilhaft, vor dem Eingang der Steuereinheit einen Monoflop anzuordnen. Dadurch kann ein kurzer eingehender Impuls entsprechend verlängert oder auch verkürzt werden.

Das Korrektursignal kann grundsätzlich in verschiedener Weise auf das Meßsignal einwirken. Dabei hat es sich bewährt, daß ein Korrektursignal nur dann abgegeben wird, wenn eine Rückströmung stattfindet, d.h., daß bei Strömung in Ansaugrichtung kein Signal an die Steuereinheit abgegeben wird. -Das Korrektursignal kann grundsätzlich auf drei besonders vorteilhafte Weisen auf das Meßsignal einwirken:

1. Die Steuereinheit kann das von der Massenfluß-Meßvorrichtung eingehende Meßsignal so lange unterdrücken, wie ein Korrektursignal am zweiten Eingang der Steuereinheit anliegt. Auf diese einfache Art und Weise kann das unnötige und schädliche Überdosieren des Treibstoffes vermieden werden. Es versteht sich von selbst, daß gerade bei einer derartigen Vorrichtung einem das Ausgangssignal glättenden Integrator besondere Bedeutung zukommt.

2. Die Steuereinheit kann den während der Zeitdauer eines am Eingang anliegenden Korrektursignals festgestellten Wert des Meßsignals von demjenigen Wert des Meßsignals subtrahieren, der im Zeitraum des ausbleibenden Korrektursignals festgestellt ist. Diese theoretisch korrekte Beeinflussung setzt voraus, daß sowohl der Massenstrom als auch die Strömungsrichtung völlig trägheitslos und unter gleichen Meßbedingungen festgestellt werden. Dies ist in der Praxis nur mit großem Aufwand zu erreichen. So besitzt auch die Massenfluß-Meßvorrichtung einen gewissen integrierenden Charakter, da die bei Rückströmung vom Meßelement erwärmte Luft nach Wechsel zur normalen Strömungsrichtung das Meßelement nochmals bestreicht und somit weniger abkühlt. Daher hat sich die nachfolgend beschriebene Beeinflussung als wirtschaftlich am sinnvollsten herausgestellt.

3. Die Steuereinheit kann den während der Zeitdauer eines am Eingang anliegenden Korrektursignals festgestellten Wert des Meßsignals auf einen vorher bestimmten Bruchteil reduzieren. Durch Vorgabe des Bruchteils sowie dessen Variation in Abhängigkeit vom Massenstrom und/oder der Drehzahl des Motors ist eine optimale Anpassung an die verschiedenen Betriebszustände und die technischen Gegebenheiten der Meßvorrichtungen möglich.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachstehenden Beschreibung von der in der Zeichnung dargestellten bevorzugten Ausführungsbeispielen.

Es zeigen:

Fig. 1 in schematischer Seitenansicht die Anordnung eines Ausführungsbeispiels der erfindungsgemäßen Vorrichtung,

Fig. 2 den schematischen Schaltplan einer Brückenschaltung der erfindungsgemäßen Vorrichtung mit temperaturabhängigen Widerständen,

Fig. 3 den schematischen Schaltplan einer erfindungsgemäßen Vorrichtung mit Thermoelementen,

Fig. 4 schematisch die Schaltungsanordnung zur Steuerung der Treibstoff-Dosiervorrichtung in Weiterbildung der erfindungsgemäßen Vorrichtung.

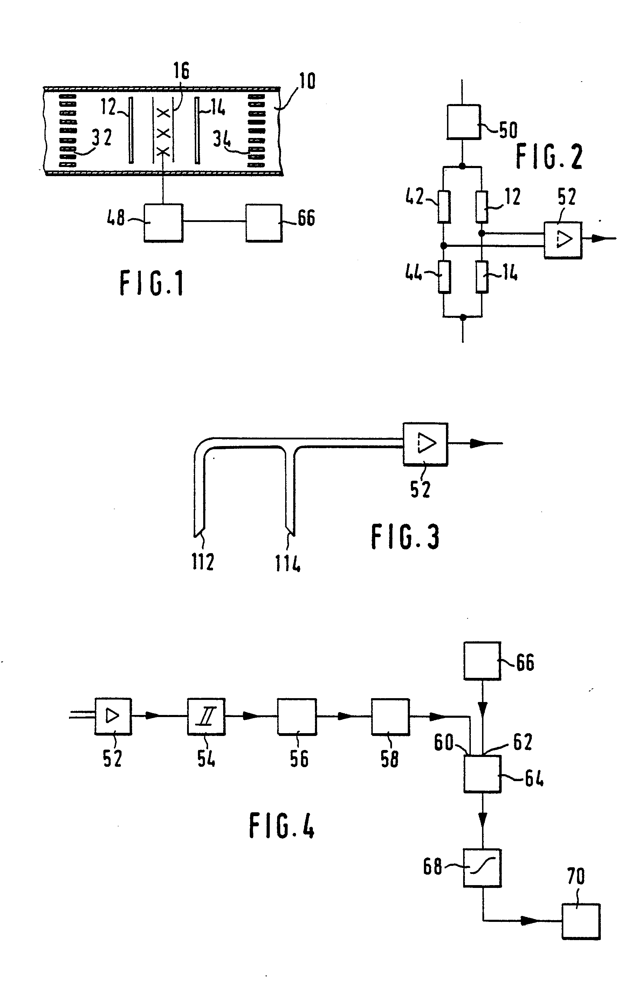

Figur 1 zeigt schematisch in einem Strömungskanal (10) die geometrische Anordnung von Temperatur-Meßelementen (12 und 14), zwischen denen mittig ein Heizelement (16) angeordnet ist. Die Temperatur-Meßelemente (12 und 14) sind schematisch als Drähte in der Seitenansicht gezeichnet, welche das Zentrum des im Strömungskanal (10) strömenden Massenstroms durchsetzen. Als Heizelement (16) ist ein sich in Längsrichtung parallel zu den Temperatur-Meßelementen erstreckender flacher Körper dargestellt. Die Anordnung der Temperatur-Meßelemente (12 und 14) ist symmetrisch zum Heizelement (16). Erfolgt die Strömung beispielsweise in Fig. 1 von links nach rechts, so wird das Temperatur-Meßelement (12) vom unbeeinflußten Zustrom des Fluids umströmt, während das Temperatur-Meßelement (14) im Abstrom vom Heizelement (16) liegt. Somit wird in diesem Fall das Temperatur-Meßelement (14) zusätzlich erwärmt.

Bei umgekehrter Strömungsrichtung, also von rechts nach links kehren sich die Strömungsverhältnisse an den Temperatur-Meßelementen um und damit tritt die umgekehrte Änderung deren elektrischer Eigenschaften ein. Zur Vermeidung des Einflusses von Turbulenzen sind beiderseits der Vorrichtung "Strömungsgleichrichter" (32 bzw. 34) angeordnet. Diese Strömungsgleichrichter sind wabenförmige Körper mit zahlreichen parallelen Strömungskanälen. Auf diese Weise ist sichergestellt, daß die eigentliche Meßvorrichtung stets laminar angeströmt ist.

Die von einer Spannungsquelle (48) abgegebene Speisespannung für das Heizelement (16) ist in Abhängigkeit vom Meßsignal einer Massenfluß-Meßvorrichtung (66) gesteuert. Dadurch wird erreicht, daß bei hohem Massenfluß eine stärkere Heizung des Heizelementes (16) erfolgt als bei geringem Massenfluß, oder mit anderen Worten, es wird eine Überhitzung des Heizelementes (16) bei niedrigem Massenfluß verhindert. Die Speisespannung für das Heizelement (16) wird dabei so geregelt, daß die Temperatur des Heizelementes um einen bestimmten Differenzbetrag höher liegt als die Temperatur des einströmenden Fluids.

In Fig. 2 sind mit den Bezugszeichen (12) und (14) bzw. (42) und (44) die Widerstände einer Brückenschaltung bezeichnet, wobei die Widerstände (12 und 14) sowie (42 und 44) jeweils als Spannungsteiler geschaltet sind. Die Speisung der Brückenschaltung erfolgt über die variable Spannungs-/Stromquelle (50). Die Widerstände (42 und 44) sind Festwiderstände, die Widerstände (12 und 14) sind temperaturabhängige Widerstandselemente, die in voneinander verschiedenen Positionen in einem strömenden Fluid angeordnet sind. Infolge unterschiedlicher Position zu dem das Fluid erwärmenden Heizelement werden die temperaturabhängigen Widerstandselemente (12 und 14) von der Strömung verschieden stark erwärmt, so daß sich ihre Widerstände in verschiedenem Maße ändern. Dadurch tritt an den Meßpunkten zwischen den Widerständen (42 und 44) bzw. zwischen den Widerstandselementen (12 und 14) eine Spannungsdifferenz in der Brückendiagonalen auf. Aus dieser Spannungsdifferenz wird über einen Verstärker (52) ein Korrektursignal geformt.

In Fig. 3 sind mit den Bezugszeichen (112 und 114) Thermoelemente bezeichnet, die als Temperatur-Meßelememte (12, 14) in einer Anordnung gemäß Fig. 1 vorgesehen sind. Die beiden Thermoelemente sind mit je einem gleichpoligen Schenkel direkt miteinander verbunden, wobei die beiden anderen Schenkel mit einem Verstärker (52) verbunden sind. Auf diese Weise wird dem Verstärker (52) nur das Differenzsignal der beiden Thermoelemente (112, 114) zugeführt, das der Erkennung der Strömungsrichtung dient. Der Vorteil der Verwendung von Thermoelementen liegt nicht nur in deren geringerer Bruchempfindlichkeit, sondern auch darin, daß das Meßsignal unabhängig von einer äußeren Stromquelle zur Verfügung steht.

Im Ausführungsbeispiel sind Thermoelemente aus Kupfer-Konstantan verwendet, wobei zur Erreichung einer höheren thermoelektrischen Spannung mehrere Paare zu einer Thermoelementbatterie hintereinander geschaltet sind.

Fig. 4 zeigt schematisch die Weiterleitung des vom Verstärker (52) abgegebenen Korrektursignals. Ein als Schwellwertschalter dienender Schmitt-Trigger siebt einerseits zu niedrige Signale aus und gibt andererseits ein konstantes Signal unabhängig von der Größe des Eingangssignals weiter. Der Ausgang des Schmitt-Triggers (54) ist mit einem Eingang (60) einer Steuereinheit (64) verbunden. An einem weiteren Eingang (62) der Steuereinheit (64) wird das Meßsignal der Massenstrom-Meßvorrichtung (66) empfangen. Der Ausgang der Steuereinheit (64) ist mit einer Treibstoff-Dosiervorrichtung (70) verbunden. Die Pulsationen des Massenstromes, welche zu pulsierenden Signalen führen, werden mittels eines Integrators (68) geglättet. Da Massenstrom-Meßvorrichtung (66) und die der Richtungserkennung dienenden Widerstandselemente (12 und 14) an unterschiedlichen Stellen im Ansaugsystem angeordnet sind und verschiedene Ansprechzeiten aufweisen können, ist ein Phasenschieber (56) vorgesehen, welcher für die Synchronisation der Signale sorgt. Zur Korrektur der Impulslänge der Meßsignale ist weiterhin ein Monoflop (58) vorgesehen, der es ermöglicht, die Impulsdauer des Korrektursignals verschieden von der Impulslänge des Eingangssignales zu steuern.

Die Steuereinheit (64) hat die Aufgabe, das an die Treibstoff-Dosiervorrichtung abgegebene Signal, welches in der Hauptsache durch die Massenstrom-Meßvorrichtung beeinflußt ist, entsprechend dem Korrektursignal anzupassen. Entsprechend dem nur bei Rückströmung auftretenden Korrektursignal wird von der Steuereinheit, das während dieser Phase der Pulsation eingehende Meßsignal der Massenstrom-Meßvorrichtung entweder unterdrückt, vom Wert des während der übrigen Phase eingehenden Meßsignals abgezogen oder das Meßsignal auf einen zwischen dem Meßwert und Null liegenden Bruchteil reduziert, wobei das Maß des Bruchteils sowohl von der Motordrehzahl als auch von der Höhe des Massenstromes abhängig ist.

## Ansprüche

1. Vorrichtung zur Bestimmung der Durchflußrichtung eines mit bekanntem Massenstrom im wesentlichen gerichtet strömenden Fluids mit einem elektrisch beheizten Heizelement und zumindest einem Temperatur-Meßelement, **dadurch gekennzeichnet**, daß benachbart zum Heizelement (16) zwei Temperatur-Meßelemente (12, 14) angeordnet sind, wobei je nach Strömungsrichtung das eine Temperatur-Meßelement (12 oder 14) im Zustrom und das andere Temperatur-Meßelement (14 bzw. 12) im Abstrom vom Heizelement (16) angeordnet ist.

2. Vorrichtung nach Anspruch 1, **dadurch gekennzeichnet**, daß das Heizelement (16) und die diesem zugeordneten Temperatur-Meßelemente (12) und (14) in einem Bereich laminarer Strömung angeordnet sind.

3. Vorrichtung nach Anspruch 1 oder 2, **dadurch gekennzeichnet**, daß das Heizelement (16) mit einer Temperatur-Regelvorrichtung (48) verbunden ist.

4. Vorrichtung nach Anspruch 3, **dadurch gekennzeichnet**, daß das Heizelement (16) als PTC-Pille ausgebildet ist.

5. Vorrichtung nach wenigstens einem der Ansprüche 1 bis 4, **dadurch gekennzeichnet**, daß die Temperatur-Meßelemente (12, 14) als Spannungsteiler in einer Brückenschaltung (12, 14, 42, 44) angeordnete temperaturabhängige Widerstandselemente sind.

6. Vorrichtung nach Anspruch 5, **dadurch gekennzeichnet**, daß die Widerstandselemente (12, 14) einen positiven Temperatur-Koeffizienten aufweisen.

7. Vorrichtung nach Anspruch 5, **dadurch gekennzeichnet**, daß die Widerstandselemente (12, 14) einen negativen Temperatur-Koeffizienten aufweisen.

8. Vorrichtung nach Anspruch 6 oder 7, **dadurch gekennzeichnet**, daß die Widerstandselemente (12, 14) drahtförmig ausgebildet sind.

9. Vorrichtung nach Anspruch 6 oder 7, **dadurch gekennzeichnet**, daß die Widerstandselemente (12, 14) folienförmig ausgebildet sind.

10. Vorrichtung nach Anspruch 5, **dadurch gekennzeichnet**, daß eine Regeleinheit (50) zur Regelung der Speisespannung der Brückenschaltung (12, 14; 42, 44). zur Einstellung der Meßtemperatur der temperaturabhängigen Widerstandselemente (12, 14) vorgesehen ist.

11. Vorrichtung nach wenigstens einem der Ansprüche 1 bis 4, **dadurch gekennzeichnet,** daß die Temperatur-Meßelemente Thermoelemente (112, 114) sind.

12. Vorrichtung nach Anspruch 11, **dadurch gekennzeichnet**, daß die jeweils vor bzw. hinter dem Heizelement (16) angeordneten Thermoelemente (112, 114) mit entgegengesetzter Polarität elektrisch hintereinander geschaltet sind.

13. Vorrichtung nach Anspruch 1, **dadurch gekennzeichnet**, daß diese mit einer an sich bekannten Vorrichtung zur Steuerung der Treibstoffeinspritzung für einen Verbrennungsmotor in Abhängigkeit vom Massenstrom der angesaugten Luftmenge verbunden ist, wobei die Treibstoffdosierung in Abhängigkeit von den abgegebenen Signalen der Temperatur-Meßelemente (12, 14) erfolgt.

14. Vorrichtung nach Anspruch 13, **dadurch gekennzeichnet,** daß die Temperatur-Meßelemente mit dem Eingang eines Verstärkers (52) verbunden sind, dessen Ausgang über einen Schmitt-Trigger (54) mit dem Eingang (60) einer Steuereinheit (64) verbunden ist, welche mit einem zweiten Eingang (62) außerdem mit einer Massenstrom-Meßvorrichtung (66) und ausgangsseitig mit einer Treibstoff-Dosiervorrichtung (70) verbunden ist.

15. Vorrichtung nach Anspruch 14, **dadurch gekennzeichnet**, daß zwischen dem Ausgang der Steuereinheit (64) und dem Eingang der Treibstoff-Dosiervorrichtung (66) ein Integrator (68) angeordnet ist.

16. Vorrichtung nach Anspruch 15, **dadurch gekennzeichnet**, daß zwischen dem Ausgang des Schmitt-Triggers (54) und dem Eingang (60) der Steuereinheit (64) ein Phasenschieber (56) und/oder ein Monoflop (58) angeordnet ist.

17. Vorrichtung nach Anspruch 14, **dadurch gekennzeichnet**, daß die Steuereinheit (64) das von der Massenfluß-Vorrichtung (66) nach Anspruch 15 eingehende Meßsignal solange unterdrückt, wie ein Korrektursignal am Eingang (60) anliegt.

18. Vorrichtung nach Anspruch 14, **dadurch gekennzeichnet**, daß die Steuereinheit (64) den während der Zeitdauer eines am Eingang (60) anliegenden Korrektursignals festgestellten Wert des Meßsignals von demjenigen Wert des Meßsignals subtrahiert, der im Zeitraum ausbleibenden Korrektursignals festgestellt ist.

19. Vorrichtung nach Anspruch 14, **dadurch gekennzeichnet**, daß die Steuereinheit (64) den während der Zeitdauer eines am Eingang (60) anliegenden Korrektursignals festgestellten Wert des Meßsignals auf einen vorher bestimmten Bruchteil reduziert.

FIG.1

FIG.2

FIG.3

FIG.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 024 761 (DJORUP) * Spalte 5, Zeilen 33-57; Spalte 6, Zeile 22 - Spalte 7, Zeile 6; Figuren 7,8,11 * | 1,3,5,9 | G 01 P 13/02 G 01 P 5/10 |
| A | | 6,7,10, 14 | |
| | --- | | |
| X | DE-A-2 423 302 (OUTOKUMPU OY) * Seite 2, Zeile 20 - Seite 3, Zeile 12; Figuren 1,5 * | 1,5-7, 11,12 | |
| | --- | | |
| Y | EP-A-0 035 680 (DEGUSSA) * Seite 1, Zeilen 1-9; Seite 3, Zeilen 1-10; Figuren 1-4 * | 2 | |
| X | --- US-A-2 509 889 (W. SHOCKLEY) * Spalte 1, Zeile 54 - Spalte 2, Zeile 42; Figur 1 * ----- | 1,5 | |

RECHERCHIERTE SACHGEBIETE (Int. Cl.4)

G 01 P
G 01 F

Der vorliegende Recherchenbericht wurde für alle Patentansprüche erstellt

| Recherchenort | Abschlußdatum der Recherche | Prüfer |
|---|---|---|
| DEN HAAG | 09-02-1988 | HANSEN P. |